# EUROPEAN PATENT APPLICATION

(11) **EP 1 916 189 A1**
(43) Date of publication of application: **30.04.2008**
(21) Application number: 06122826.8
(22) Date of filing: 24.10.2006
(51) Int. Cl.: B65B 25/02, A01G 5/02

(54) **Method and apparatus for bundling flowers**

(71) Applicant: Bercomex B.V., 1624 PB Hoorn (NL)
(72) Inventor: Wagenaar, Robert Bernardus Jozef, 1696 BD, Oosterblokker (NL); Heibloem, Ronald Johan, 1621 CC, Hoorn (NL)
(74) Representative: Voncken, Bartholomeus Maria Ch.

(57) **Abstract**

A method and apparatus for bundling flowers provide for positioning a bunch of flowers (2) on a conveyor (1), such that the flowers substantially extend transversally to the conveying direction (3) of the conveyor (1); conveying said bunch of flowers (2) towards a taper unit (6) for winding a length of self-sticking tape around the bunch of flowers (2); upon arrival of the bunch of flowers (2) at the taper unit (6) winding a length of tape around the bunch of flowers (2), and after applying the tape removing the tapered bunch of flowers (2) by means of the conveyor (1). Preferably during the winding of a length of tape also a bag (13) of fertilizer is positioned between the windings of the tape.

## Description

Firstly the invention relates to a method for bundling flowers. Flowers, and especially cut flowers, are sold as bunches of flowers which are bundled to obtain a neat and compact appearance.

It is an object of the present invention to provide an improved method for bundling flowers.

Therefore, in first aspect of the present invention, a method for bundling flowers comprises the steps of positioning a bunch of flowers on a conveyor, such that the flowers substantially extend transversally to the conveying direction of the conveyor; conveying said bunch of flowers towards a taper unit for winding a length of self-sticking tape around the bunch of flowers; upon arrival of the bunch of flowers at the taper unit winding a length of tape around the bunch of flowers, and after applying the tape removing the tapered bunch of flowers by means of the conveyor.

The bunch of flowers which is conveyed by the conveyor towards the taper unit may comprise a number of separate flowers (generally cut flowers) positioned within a frusto-conical plastic bag, wherein the stems of the flowers extend out of the lower, narrower end of such a bag. It should be noted, however, that the present invention is also applicable to bunches of flowers not having such a plastic bag, but other means for defining the bunch, if any.

When the bunch of flowers reaches the taper unit, said taper unit winds a length of tape around the bunch of flowers (which winding, as is know per se, generally will occur at the stems of the flowers). Upon completion of this winding operation the tapered bunch of flowers is removed by the conveyor. Because the bunch of flowers is positioned on the conveyor in such a manner that the flowers substantially extend transversally to the conveying direction of the conveyor, it is possible to position the flowers such that at least part of the stems of the flowers extends beyond the edge of the conveyor, and thus the stems are readily accessible for the taper unit for winding the tape around the bunch of flowers (or, more specifically, around the stems of the flowers).

In a preferred embodiment of the method in accordance with the present invention the step of winding a length of tape also comprises the step of positioning a bag of fertiliser between the windings of the tape. As a result a tapered bunch of flowers will be obtained having attached thereto said bag of fertiliser in a neat manner without folds.

Preferably, positioning the bag of fertiliser between the windings of the tape occurs in such a manner, that the bag of fertiliser is adhered to a portion of the self-sticking tape before latter is wound around the bunch of flowers. Adhering the bag to a portion of the self-sticking tape before this tape is wound around the bunch of flowers results in a very reproducible positioning of the bag onto the tape, and thus onto the bunch of flowers, independent from the shape of the bunch of flowers, which shape may vary substantially. It is noted that the bag of fertiliser may be adhered to the tape before any part of the tape is wound around the bunch of flowers. However, it is also possible that already part of the tape is wound, but that the bag is adhered to a portion of the tape not yet wound. During adhering the bag to the tape, the winding temporarily may be stopped.

Still further, it is possible that the tape is supplied from a supply roll of tape wherein a desired length of tape is wound off from the supply roll before being wound around the bunch of flowers.

When the winding of the tape around the bunch of flowers would occur directly from the supply roll of tape, the tension with which the tape would be wound around the bunch of flowers would depend from the force needed to unwind the tape from the supply roll. Because such a force can be substantial, the winding around the bunch of flowers could become very tight, which can lead to damaging the (stems of the) flowers, especially in the case of fragile flowers, such as for example tulips. According to the present embodiment, however, the desired length of tape is already wound off from the supply roll before being wound around the bunch of flowers (as a manner of speaking, a buffer supply of tape is created), such that during winding said desired length of tape around the bunch of flowers the unwinding force no longer exists, and the winding around the bunch of flowers may occur more gently, with a lower winding force (for example 1 to 10 N, compared with 10 N needed for unwinding the tape from the supply roll). The winding force now can be set independently from the unwinding force. The need for a tape with low unwinding force (i.e. less sticky tape) with consequent less strong winding result, does not arise.

For improving the reproducibility of the method according to the present invention, it is preferred that upon arriving at the taper unit and previous to winding the tape, the bunch of flowers is positioned and fixated by fixating means. For example, such fixating means could comprise movable braces for engaging the bunch of flowers at opposite sides from the desired location of application of the tape. Such fixating means (for example braces) define a very reproducible and stable position of the bunch of flowers, such that the taper unit always will act in the same manner upon such a bunch of flowers.

Because winding the length of tape around the bunch of flowers will take some time, it is preferred that upon arrival of the bunch of flowers at the taper unit the relative velocity (as seen in the conveying direction of the conveyor) between the bunch of flowers and the taper unit is reduced or eliminated during winding the tape around the bunch of flowers. As a result it is ensured, that at least during such a winding action the taper unit is maintained substantially in the same position as seen in the conveying direction of the conveyor (of course the tape unit generally will move in a certain prescribed manner to apply the tape around the bunch of flowers), at least during winding the tape around the bunch of flowers.

Maintaining the taper unit substantially in the same position relative the to taper unit basically may occur in two different ways. Firstly it is possible that the conveyor is slowed down or stopped during winding the tape. Basically this means, that the conveyor conveys in a stepped manner, or in other words alternatingly moves and stands still according to a predetermined pattern.

Secondly, and as an alternative, it is possible however, that the entire taper unit is moved in the conveying direction of the conveyor during winding the tape. With such an embodiment the conveyor is not slowed down or stopped but conveys continuously. During its winding action the taper unit moves along with the conveyor in the conveying direction and after completion of the winding action the taper unit is moved back, opposite to the conveying direction of the conveyor, towards its starting position. This means, that the taper unit will move to end fro in parallel to the conveying direction of the conveyor in accordance with a predetermined pattern.

According to yet another embodiment, winding a length of self-sticking tape around the bunch of flowers occurs with a settable number of windings. The number of windings not necessarily has to be an integer, and can be set to optimise the result (less emvironmental pollution, less frequent change of supply rolls, easier removal of tape by customer) .

The invention secondly relates to an apparatus for bundling flowers. In accordance with the present invention such an apparatus comprises a conveyor for conveying a bunch of flowers such that the flowers substantially extend transversally to the conveying direction of the conveyor, and a taper unit for winding a length of self-sticking tape around the bunch of flowers.

Again it is possible, but not necessary, that the bunch of flowers comprises a number of flowers (cut flowers) surrounded by a frusto-conical plastic bag.

Preferably, a positioning mechanism is provided for positioning a bag of fertiliser between the windings of the tape. For example it is possible that a bag supply for supplying bags of fertiliser to the taper unit is provided and wherein the positioning mechanism comprises a pivoting transfer arm pivoting between a first position in which it receives a bag of fertiliser from the bag supply and a second position in which the bag of fertiliser is adhered to a portion of the self-sticking tape before latter is wound around the bunch of flowers. Of course, the operation of the pivoting transfer arm will be synchronized with the operation of the entire taper unit.

In yet another preferred embodiment of the apparatus in accordance with the present invention, the taper unit comprises a supply roll for the tape and a buffering means by means of which a desired length of tape is wound off from the supply roll before being wound around the bunch of flowers. The provision of such a buffering means makes it possible to wind the tape around the bunch of flowers more gently, eliminating the influence of the force needed to unwind the tape from the supply roll.

The apparatus further may comprise fixating means for positioning and fixating the bunch of flowers for positioning and fixating the bunch of flowers upon arriving at the taper unit and previous to winding the tape. Such fixating means also will be of advantage when the bunch of flowers is provided with a plastic bag as explained above and when the tape has to be applied around said plastic bag. The fixating means then will compress the plastic bag previous to winding there around the tape. However, also when such a plastic bag is not provided, the fixating means will be helpful in obtaining a reproducible winding of the tape around the bunch of flowers (generally around the stems of the flowers).

Advantageously the fixating means comprise braces for engaging the bunch of flowers, for example two braces at opposite sides from the desired location of application of the tape. Further, such braces each could comprise an angled rod which is pivotable around a pivot axis extending substantially in parallel to the bunch of flowers.

To ensure that the taper unit may apply the length of tape in an appropriate manner, the apparatus could comprise control means for, upon arrival of the bunch of flowers at the taper unit, reducing or eliminating the relative velocity (as seen in the conveying direction of the conveyor) between the bunch of flowers and the taper unit during winding the tape around the bunch of flowers. A first solution would be that the control means temporarily slows down or stops the conveyor during winding the tape. A second solution would be that, as controlled by the control means, the entire taper unit is movable in the conveying direction of the conveyor along with the conveyor during winding the tape. After the tape has been wound around the bunch of flowers, the taper unit is moved back in the opposite direction towards its starting position again.

For carrying out its function, the taper unit may have many different shapes. In accordance with a preferred embodiment, the entire taper unit can rotate around an axis of rotation which substantially coincides with the centre line of the bunch of flowers. As a result, the length of tape which is supplied by the taper unit is neatly and in a regular manner wound around the bunch of flowers.

Further, the apparatus may comprise a movable support bridge for the bunch of flowers at a lengthwise location of the conveyor substantially corresponding to the location of the taper unit. The support bridge will be in an operative (supporting) position when a bunch of flowers is moved towards the taper unit. After having arrived at the taper unit and after having been fixated by the fixating means, the support bridge is moved away thus allowing the taper unit to move in an appropriate manner for applying the tape around the bunch of flowers (for example, in accordance with the above embodiment, by rotating around the centre line of the bunch of flowers).

Preferably, the conveyor comprises a belt conveyor. However, it is also possible that the bunch of flowers is conveyed in a different manner.

Finally, it is preferred that the taper unit, when not operative, assumes a position at a higher level then the level of a bunch of flowers on the conveyor. As a result no foreign substances (e.g. sand, leaf parts, water or sap) can pollute the tape or tape unit, leading to a reduction of malfunctions of the apparatus. Further, then a bunch of flowers can freely pass the tape unit when no tape is required or when multiple tapers are positioned one behind the other to increase the capacity of the entire process.

Hereinafter the invention will be elucidated while referring to the drawing, in which an embodiment of an apparatus in accordance with the present invention is illustrated. Herein:
Figure 1 shows, very schematically, an embodiment of an apparatus according to the invention in a top plan view;
Figures 2-9 show successive stages of the operation of the apparatus illustrated in figure 1, in a schematical side elevational view.

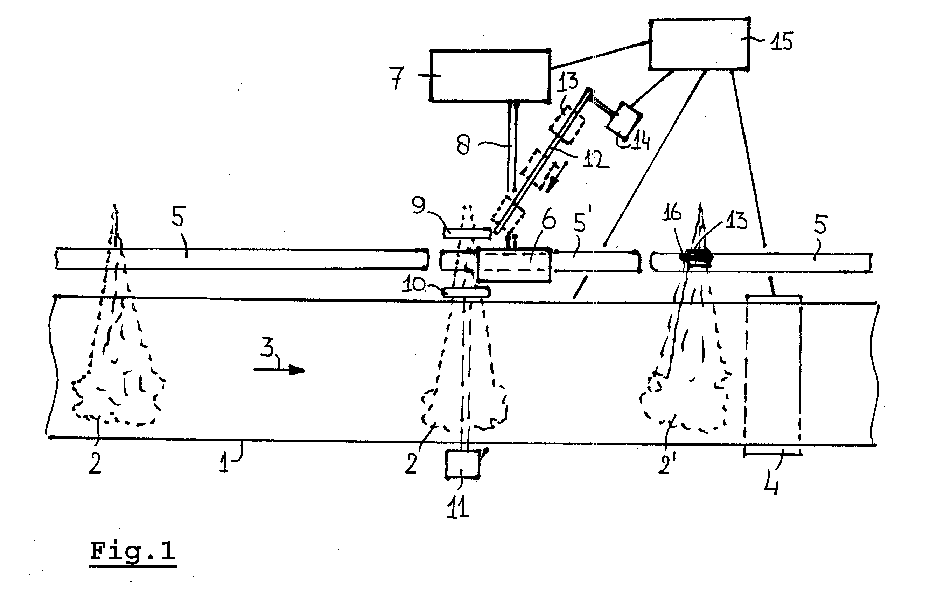

Firstly referring to figure 1, an apparatus for bundling flowers comprises a conveyor 1 for conveying a bunch of flowers 2. Each bunch of flowers 2 substantially extends transversally to the conveying direction 3 of the conveyor 1. The conveyor is driven by a drive unit 4.

Alongside the conveyor 1 a support 5 extends. This support 5 will support the stems of the bunch of flowers 2. A central part 5' of this support 5 is movable up and down (i.e. perpendicularly to the plane of drawing in figure 1). When a bunch of flowers 2 arives at said movable part 5' of the support, it is positioned in line with the previous (and following) parts of the support 5 When the taper unit (to be described later) becomes operative, said part 5' of the support will be lowered to a position in which it does not interfere with the taper unit.

A taper unit 6 for winding a length of self-sticking tape around the bunch of flowers 2 has been illustrated schematically. A taper unit drive mechanism 7 is connected to the taper unit 6, as indicated schematically by drive element 8 (in reality this drive element 8 can have a fairly complicated shape, dependent upon the movements to be carried out by the taper unit 6).

Figure 1 further shows schematically two fixating means 9 and 10 for positioning and fixating the bunch of flowers 2 upon arriving at the taper unit 6. Each such fixating means 9 and 10 may comprise a brace for engaging the bunch of flowers 2, as will be shown more in detail in the following figures. A drive 11 for fixating means 10 has been illustrated schematically; in a corresponding manner (but not shown in detail) a drive can be provided for fixating means 9. Both drives may be combined too.

Figure 1 further shows a supply 12 for supplying bags of fertiliser 13 to the taper unit 6 (in a manner to be described later). A drive 14 for said supply 12 has been illustrated schematically too.

Finally, figure 1 shows a control means 15 connected, by appropriate control lines, to the drive unit 4, taper unit drive mechanism 7, drive 11 and drive 14 for controlling the operation of said elements. Of course, such a control means 15 also could be used for controlling the operation of other elements.

Basically, using the apparatus illustrated in figure 1 the following method may be carried out for bundling flowers: firstly a bunch of flowers 2 (for example a number of flowers positioned within a frusto-concical plastic bag with open ends) is positioned on the conveyor 1. The bunch of flowers 2 is positioned in such a way, that the flowers substantially extend transversally to the conveying direction 3 of the conveyor. Upon arrival of the bunch of flowers at the taper unit 6 the conveyor 1 is temporarily stopped and the fixation means 9, 10 are operated to fixate and position the bunch of flowers 2 (previous to the arrival of the bunch of flowers 2 at the taper unit 6 said fixating means 9, 10 are in a position for receiving the bunch of flowers 2; the movement of the fixating means 9, 10 is controlled by drive means, such as, for example, drive 11). The fixating means 9, 10 engage the bunch of flowers 2 at opposite sides from a desired location, at which the taper unit 6 should apply a length of self-sticking tape around the bunch of flowers 2. The support 5' is lowered. Next the taper unit 6 and supply 12 are activated in such a manner that a length of self-sticking tape and a bag 13 are attached to the bunch of flowers 2. Thereafter, the fixating means 9, 10 release the bunch of flowers 2 and the conveyor 1 is activated again for removing the tapered bunch of flowers 2' which now has attached thereto a length of self-sticking tape 16 and a bag of fertiliser 13.

It should be noted, that the operation of the apparatus illustrated in figure 1 also could be in such a manner, that the conveyor 1 is not stopped, but that the entire taper unit 6 is temporarily moved along with the conveyor 1 when the tape is applied to the bunch of flowers 2. In such a case, also the fixating mean 9, 10 (if applied) should move along with a conveyor 1. Such a movement of the taper unit 6 also could result from the operation of taper unit drive mechanism 7 and drive element 8.

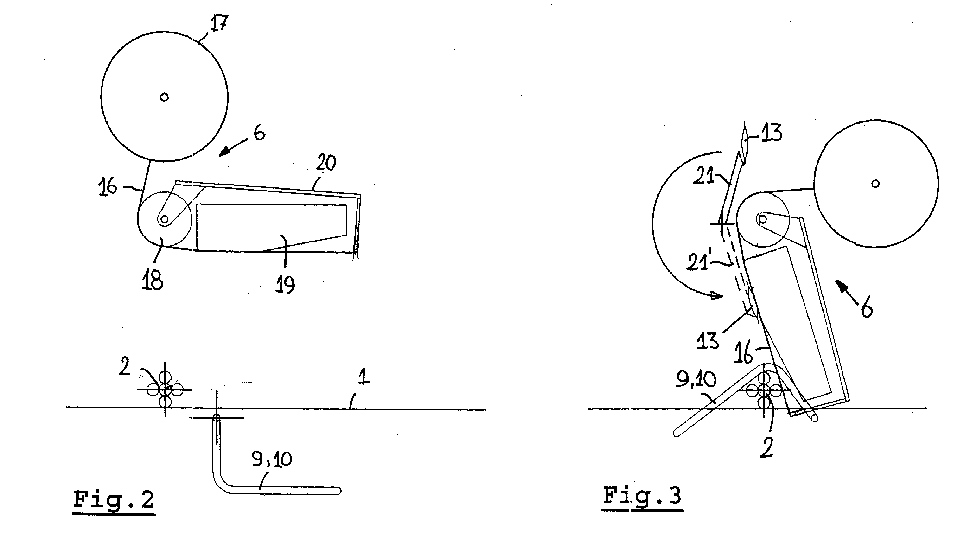

For further details of the operation of the taper unit 6 reference is made now to figures 2-9. In figure 2 a bunch of flowers 2 has arrived at the taper unit 6. The taper unit 6 comprises a supply roll 17 for tape 16, a guide roll 18, a tape guide 19 and a tape holder and cutter 20. In figure 2 the taper unit 6 is in an inoperative position (pivoted away from the bunch of flowers 2). A free end of the tape 16 adheres to an end of the taper holder and cutter 20.

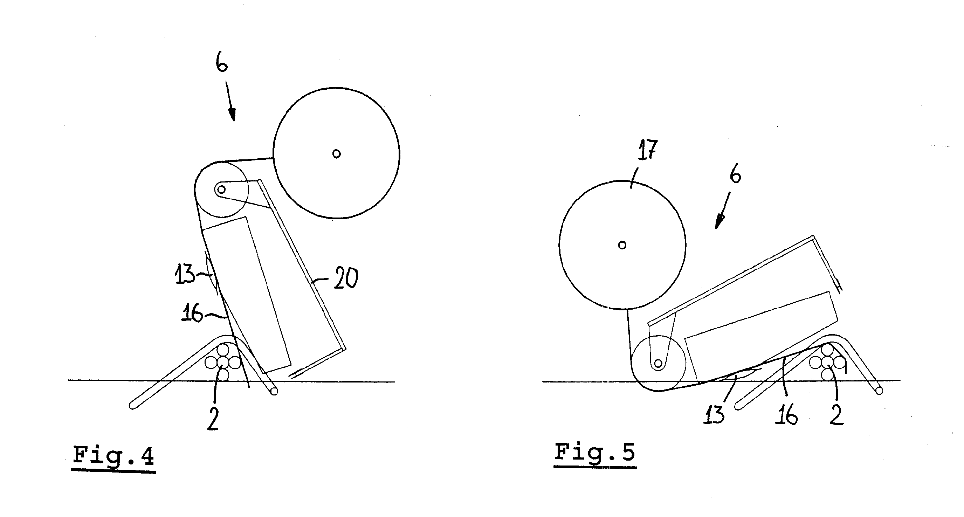

In figure 3 the fixating means 9, 10 have been rotated (for example by drive 11, see figure 1) towards a position in which they engage the bunch of flowers 2. By an appropriate activation of taper unit drive mechanism 7 (see figure 1) the entire taper unit 6 is pivoted to a position in which tape 16 engages the bunch of flowers 2.

A bag 13 of fertiliser supplied by supply 12 is transferred towards tape 16 by means of a pivoting transfer arm 21, which moves from a position (21) for receiving the bag 13 towards a position (21') for delivering the bag unto the tape 16. The operation of supply 12 and pivoting transfer arm 21 also is controlled by control means 15 (figure 1) .

Figure 4 shows a situation, in which tape holder and cutter 20 is pivoted away from the tape 16, such that tape 16 is released therefrom while remaining attached to the bunch of flowers 2.

Referring to figure 5, the taper unit drive mechanism 7 (see figure 1) is now activated in such a manner that the entire taper unit 6 is rotated around the bunch of flowers 2. The bunch of flowers 2 coincides with the centre of such a rotating movement of the taper unit 6. During such a rotating movement of the taper unit 6 a length of tape 16 is wound around the bunch of flowers 2, while the tape is wound off from the supply roll 17. The number of revolutions of the taper unit 6 around the bunch of flowers 2 may vary, but generally two revolutions will be sufficient. During this winding action also the bag 13 of fertiliser will be attached to the bunch of flowers 2, between the windings of the tape 16.

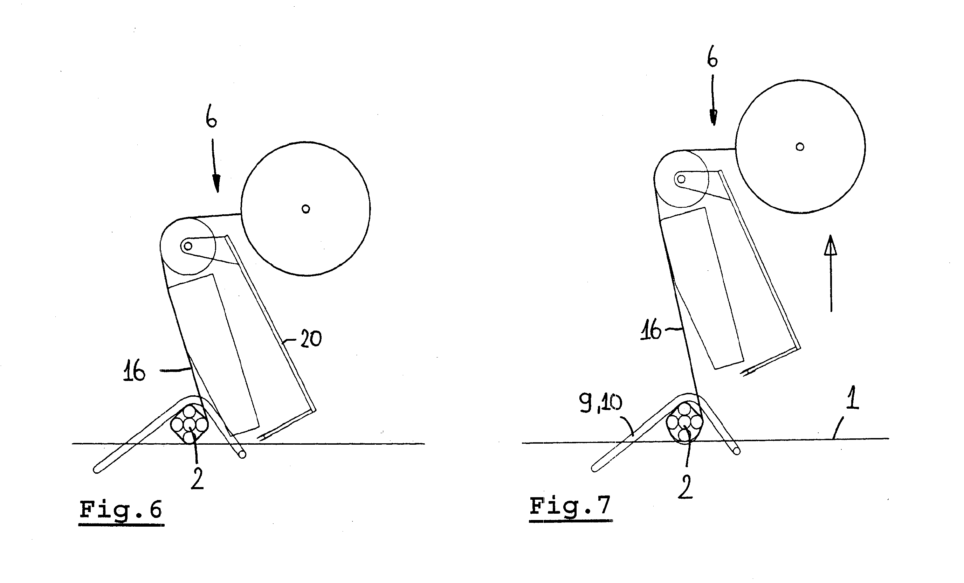

Figure 6 shows the end of the winding process. The length of tape 16 has surrounded the bunch of flowers 2 and the rotating movement of the taper unit 6 has stopped.

Next, as illustrated in figure 7, the entire taper unit 6 is moved away radially (specifically, in this case, moved upwardly) from the bunch of flowers 2. Such a movement of the taper unit 6 also may be realised by means of the taper unit drive mechanism 7 under control of the control means 15.

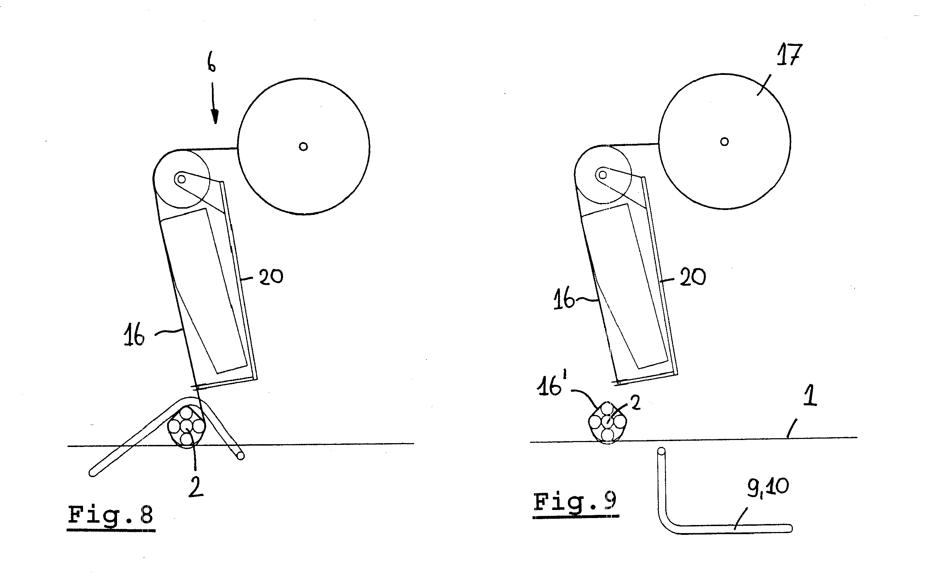

Then the tape holder and cutter 20 is moved back towards the tape 16 (figure 8) such that the tape 16 will be cut and the winding around the bunch of flowers 2 is completed. The free end of the tape 16 leading to the supply roll 17 again adheres to the end of the tape holder and cutter 20 whereas the severed length of tape 16' effectively surrounds the bunch of flowers 2. The cutting process is illustrated in figure 8, whereas figure 9 shows the end situation, in which also fixating means 9, 10 are rotated back towards a release position. Now conveyor 1 may be activated again for removing the completed bundled bunch of flowers 2.

It is noted, that previous to winding the tape 16 around the bunch of flowers 2 as illustrated in figure 5 and 6 it is also possible to firstly wind off a respective length of tape 16 from the supply roll 17 and to temporarily store said length of tape in a buffer device (not illustrated). As a result one can avoid that the winding around the bunch of flowers 2 will occur under influence of the force needed for unwinding the self-sticking tape 16 from the supply roll 17.

The invention is not limited to the embodiment described before, which may be varied widely within the scope of the invention as defined by the appending claims.

## Claims

1. Method for bundling flowers, comprising the steps of:
- positioning a bunch of flowers on a conveyor, such that the flowers substantially extend transversally to the conveying direction of the conveyor;
- conveying said bunch of flowers towards a taper unit for winding a length of self-sticking tape around the bunch of flowers;
- upon arrival of the bunch of flowers at the taper unit winding a length of tape around the bunch of flowers, and
- after applying the tape removing the tapered bunch of flowers by means of the conveyor.

2. Method according to claim 1, wherein the step of winding a length of tape also comprises the step of positioning a bag of fertilizer between the windings of the tape.

3. Method according to claim 2, wherein the bag of fertilizer is adhered to a portion of the self-sticking tape before latter is wound around the bunch of flowers.

4. Method according to any of the claims 1-3, wherein the tape is supplied from a supply roll of tape and wherein a desired length of tape is wound off from the supply roll before being wound around the bunch of flowers.

5. Method according to any of the claims 1-4, wherein upon arriving at the taper unit and previous to winding the tape the bunch of flowers is positioned and fixated by fixating means.

6. Method according to claim 5, wherein the fixating means comprise movable braces for engaging the bunch of flowers at opposite sides from the desired location of application of the tape.

7. Method according to any of the claims 1-6, wherein upon arrival of the bunch of flowers at the taper unit the relative velocity (as seen in the conveying direction of the conveyor) between the bunch of flowers and the taper unit is reduced or eliminated during winding the tape around the bunch of flowers.

8. Method according to claim 7, wherein the conveyor is slowed down or stopped during winding the tape.

9. Method according to claim 7, wherein the entire taper unit is moved in the conveying direction of the conveyor during winding the tape.

10. Method according to any of the previous claims, wherein winding a length of tape around the bunch of flowers occurs with a settable number of windings.

11. Apparatus for bundling flowers, comprising:
- a conveyor for conveying a bunch of flowers such that the flowers substantially extend transversally to the conveying direction of the conveyor, and
- a taper unit for winding a length of self-sticking tape around the bunch of flowers.

12. Apparatus according to claim 11, wherein a positioning mechanism is provided for positioning a bag of fertilizer between the windings of the tape.

13. Apparatus according to claim 12, further comprising a bag supply for supplying bags of fertilizer to the taper unit and wherein the positioning mechanism comprises a pivoting transfer arm pivoting between a first position in which it receives a bag of fertiliser from the bag supply and a second position in which the bag of fertilizer is adhered to a portion of the self-sticking tape before latter is wound around the bunch of flowers.

14. Apparatus according to any of the claims 11-13, wherein the taper unit comprises a supply roll for the tape and a buffering means by means of which a desired length of tape is wound off from the supply roll before being wound around the bunch of flowers.

15. Apparatus according to any of the claims 11-14, further comprising fixating means for positioning and fixating the bunch of flowers upon arriving at the taper unit and previous to winding the tape.

16. Apparatus according to claim 15, wherein the fixating means comprise braces for engaging the bunch of flowers.

17. Apparatus according to claim 16, wherein the fixating means comprise two braces, at opposite sides from the desired location of application of the tape.

18. Apparatus according to claim 16 or 17, wherein each brace comprises an angled rod which is pivotable around a pivot axis extending substantially in parallel to the bunch of flowers.

19. Apparatus according to any of the claims 11-18, comprising control means for, upon arrival of the bunch of flowers at the taper unit, reducing or eliminating the relative velocity (as seen in the conveying direction of the conveyor) between the bunch of flowers and the taper unit during winding the tape around the bunch of flowers.

20. Apparatus according to claim 19, wherein the control means temporarily slows down or stops the conveyor during winding the tape.

21. Apparatus according to claim 19, wherein, as controlled by the control means, the entire taper unit is movable in the conveying direction of the conveyor during winding the tape.

22. Apparatus according to any of the claims 11-21, wherein the entire taper unit can rotate around an axis of rotation which substantially coincides with the centre line of the bunch of flowers.

23. Apparatus according to claim 22, wherein the taper unit is movable to and from a direction radially to its axis of rotation.

24. Apparatus according to any of the claims 11-23, further comprising a movable support bridge for the bunch of flowers at a lengthwise location of the conveyor substantially corresponding to the location of the taper unit.

25. Apparatus according to any of the claims 11-24, wherein the conveyor comprises a belt conveyor.

26. Apparatus according to any of the claims 11-25, wherein the taper unit, when not operative, assumes a position at a higher lever then the level of a bunch of flowers on the conveyor.
